(19) Europäisches Patentamt
European Patent Office
Office européen des brevets

(11) **EP 1 883 978 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(51) Int Cl.:
*H01L 41/04* (2006.01)          *H02N 2/14* (2006.01)
*H01L 41/09* (2006.01)

(21) Anmeldenummer: 06763269.5

(22) Anmeldetag: **24.05.2006**

(86) Internationale Anmeldenummer:
**PCT/EP2006/062580**

(87) Internationale Veröffentlichungsnummer:
**WO 2006/125798 (30.11.2006 Gazette 2006/48)**

(54) **FESTKÖRPERAKTOR-ANTRIEBSVORRICHTUNG MIT EINER ENERGIEBASIERTEN GETAKTETEN LEISTUNGS-ENDSTUFE UND VERFAHREN ZUM STEUERN EINER SOLCHEN LEISTUNGS-ENDSTUFE**

SOLID STATE ACTUATOR DRIVE DEVICE WITH ENERGY BASED CLOCKED FINAL POWER STAGE AND METHOD FOR CONTROLLING SAID TYPE OF FINAL POWER STAGE

DISPOSITIF D'ENTRAINEMENT À ACTIONNEUR À L'ÉTAT SOLIDE COMPRENANT UN ÉTAGE FINAL DE PUISSANCE CADENCÉ CONTROLÉ SELON UNE QUANTITÉ D'ÉNERGIE ET PROCÉDÉ POUR COMMANDER CET ÉTAGE FINAL DE PUISSANCE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.05.2005 DE 102005024318**

(43) Veröffentlichungstag der Anmeldung:
**06.02.2008 Patentblatt 2008/06**

(73) Patentinhaber: **Noliac A/S**
**3490 Kvistgaard (DK)**

(72) Erfinder:
• **KAPPEL, Andreas**
  **85649 Brunnthal (DE)**
• **SCHWEBEL, Tim**
  **80337 München (DE)**

• **GOTTLIEB, Bernhard**
  **81739 München (DE)**
• **BACHMAIER, Georg**
  **80538 München (DE)**
• **TUMP, Christian**
  **80469 München (DE)**
• **WALLENHAUER, Carsten**
  **01987 Schwarzheide (DE)**

(74) Vertreter: **Inspicos A/S**
**Kogle Allé 2**
**P.O. Box 45**
**2970 Hørsholm (DK)**

(56) Entgegenhaltungen:
| | |
|---|---|
| **EP-A2- 1 098 429** | **EP-A2- 1 429 445** |
| **WO-A-03/091559** | **WO-A-2004/053315** |
| **WO-A2-02/078098** | **DE-A1- 19 952 950** |
| **DE-C1- 10 148 217** | **FR-A1- 2 851 378** |

**Beschreibung**

Die Erfindung bezieht sich auf eine Festkörperaktor-Antriebsvorrichtung mit einer energiebasierten getakteten Leistungs-Endstufe mit den oberbegrifflichen Merkmalen des Patentanspruchs 1 bzw. auf ein Verfahren zum Steuern einer solchen Leistungs-Endstufe mit den oberbegrifflichen Merkmalen des Patentanspruchs 6.

Durch den zunehmenden Integrationsgrad von Aktorik und Elektronik zu mechatronischen Systemen mit erweiterter Funktionalität besteht insbesondere in den Bereichen der Automobiltechnik, der Gebäudetechnik und der Automatisierungstechnik ein steigender Bedarf an kleinen, leistungsstarken und intelligenten Stellantrieben. Ein für solche Zwecke entwickelter piezoelektrischer Ringmotor ist durch den Wegfall eines Getriebes wesentlich kompakter gebaut als herkömmliche Antriebsvorrichtungen. Ein Alleinstellungsmerkmal des piezoelektrischen Ringmotors stellt das von der Drehzahl unabhängige Drehmoment dar.

Eine Festkörperaktor-Antriebsvorrichtung in Art eines solchen Piezo-Ring-Motors ist aus EP 1098429 A2 bekannt. Diese Festkörperaktor-Antriebsvorrichtung weist eine Welle mit einer Wellenachse, eine Antriebseinrichtung, welche Festkörperaktoren aufweist, zum Versetzen der Welle in eine Rotation um die Wellenachse und ein Lager mit einer Lagerwandung zum Lagern der Welle auf. Die Antriebseinrichtung ist im Wesentlichen ringförmig mit einer Durchgangsöffnung ausgebildet, wobei der Innendurchmesser der Durchgangsöffnung etwas größer als der Außendurchmesser der hindurchführenden Welle ausgebildet ist. Durch die in radialer Richtung auf die Antriebseinrichtung einwirkenden Festkörperaktoren wird die Antriebseinrichtung gegenüber der Welle in eine seitliche Hin- und Herbewegung versetzt, welche die an dem Innenumfang der Durchgangsöffnung anliegende Welle in die Rotation versetzt.

Ein weiteres Entwicklungsziel besteht darin, für sensorische Zwecke Funktionen wie Lastdetektion und Motorüberwachung zu verbessern. Dieses wird für die meisten kommerziellen Applikationen, wie z.B. Fensterheber- oder Schiebedachmotoren gefordert, z.B. um eine Einklemmschutzfunktion zu ermöglichen. Klassische Methoden der Lastdetektion, wie sie bei Elektromotoren z.B. durch Messung des Motorstroms der Antriebsvorrichtung üblich sind, sind auf diesen neuen festkörperaktorischen Antrieb jedoch nicht übertragbar.

Allgemein bekannt ist, dass Piezokeramik als elektromechanischer Wandler in beiden Richtungen wirkt. Durch das Anlegen einer mechanischen Spannung bzw. Kraft, d.h. durch eine erzwungene Deformation einer Vielschichtkeramik, wird eine elektrische Ladung generiert, die bei hochohmigem Klemmenabschluss aufgrund der Kapazität der Vielschichtkeramik als Potentialdifferenz zwischen den Klemmen abgreifbar ist, was als "direkter piezoelektrischer Effekt" bezeichnet wird. Durch das Anlegen eines elektrischen Feldes, d.h. das Aufbringen von Ladung auf eine kapazitiv wirkende Vielschichtkeramik, wird eine mechanische Spannung aufgebaut bzw. eine Deformation erzeugt, was als "inverser piezoelektrischer Effekt" bezeichnet wird.

Allgemein bekannt sind für piezoelektrische Kraftstoff-Hochdruck-Direkteinspritzventile eingesetzte Endstufen, welche eine gewisse Anzahl von Energieimpulsen in den piezoelektrischen Aktor des Injektors senden, um das Einspritzventil zu öffnen. Zum Beenden des Einspritzvorgangs und somit zum Schließen des Injektors wird die Energie nach dem selben Prinzip in die Spannungsquelle, z. B. ein Kraftfahrzeug-Bordnetz zurückgespeist.

WO 03/091559 A beschreibt eine energiebasierte Leistungs-Endstufe für eine Verstellvorrichtung mit einem Festkörperaktor und einer Steuereinrichtung zum Einladen von Energie in den Festkörperaktor und zum Ausladen aus dem Festkörperaktor. Beschrieben ist ferner, dass die Steuereinrichtung zum Kompensieren eines Lastwertes und/oder einer Temperatur, welche auf den Festkörper einwirken, ausgebildet ist.

Die Aufgabe der Erfindung besteht darin, eine verbesserte Anordnung mit einer Festkörperaktor-Antriebsvorrichtung und einer energiebasierten getakteten Leistungs-Endstufe zu deren Ansteuerung bereitzustellen, wobei die Anordnung in einfacher Art und Weise eine Lastdetektion ermöglichen soll.

Diese Aufgabe wird durch eine Festkörperaktor-Antriebsvorrichtung mit einer energiebasierten getakteten Leistungs-Endstufe mit den Merkmalen des Patentanspruchs 1 bzw. durch ein Verfahren zum Steuern einer solchen Leistungs-Endstufe mit den Merkmalen des Patentanspruchs 6 gelöst.

Vorteilhafte Ausgestaltungen sind Gegenstand von abhängigen Ansprüchen.

Bevorzugt wird insbesondere eine solche Festkörperaktor-Antriebsvorrichtung, bei welcher die Steuereinrichtung ausgebildet und ausgelegt ist, Energiepakete zwischen einer induktiven Komponente der Steuereinrichtung und den Festkörperaktoren hin und her zu laden.

Bevorzugt wird insbesondere eine solche Festkörperaktor-Antriebsvorrichtung mit einer Welle mit einer Wellenachse und einer Antriebseinrichtung, welche die Festkörperaktoren aufweist, zum Versetzen der Welle in eine Wellenrotation um die Wellenachse, wobei die Steuereinrichtung zum Erfassen und Bestimmen einer auf die Welle oder einer relativ zur Welle auf ein Gehäuse der Festkörperaktor-Antriebsvorrichtung wirkenden Last als dem Lastwert ausgebildet oder ausgelegt ist.

Bevorzugt wird insbesondere eine solche Festkörperaktor-Antriebsvorrichtung, bei welcher als Richtgröße eine Veränderung der Festkörperaktorspannung $\Delta U_{Piezo}$ über einen vorgegebenen Zeitraum T bestimmt wird gemäß

$$\Delta U_{Piezo} = U_{Piezo(0)}$$
$$- \sqrt{\frac{2}{C_{Piezo}} \left( \frac{C_{Piezo} U_{Piezo(0)}^2}{2} + \sum_{i=1}^{n_{Lade(0 \to T)}} W_{Lade(i)} + \sum_{i=1}^{n_{Entlade(0 \to T)}} W_{Entlade(i)} + \int_0^T P_{mech(t)} dt + \int_0^T P_{elekt(t)} dt \right)}$$

mit $U_{Piezo\,(0)}$ als Festkörperaktorspannung zu einem ersten Zeitpunkt t = 0, einer Großsignalkapazität $C_{Piezo}$ des Festkörperaktors, einer Anzahl $n_{Lade(0 \to T)}$ von eingeladenen Energiewerten oder Energiepulsen $W_{Lade(i)}$ variabler Größe im Zeitraum T, einer Anzahl $n_{Entlade\,(0 \to T)}$ von ausgeladenen Energiewerten oder Energiepulsen $W_{Entlade(i)}$ mit variabler Größe im Zeitraum T sowie mechanischen Leistungen $P_{mech(t)}$ und elektrischen Leistungen $P_{elekt(t)}$, welche als physikalische Größen im Zeitraum T auf die Festkörperaktoren einwirken.

Bevorzugt wird auch ein Steuerungsverfahren, bei welchem Energiepakete zwischen einer induktiven Komponente der Steuereinrichtung und den Festkörperaktoren hin und her geladen werden.

Bevorzugt wird insbesondere ein solches Verfahren, bei dem die Steuereinrichtung eine Festkörperaktor-Antriebsvorrichtung mit einer Welle mit einer Wellenachse und mit einer Antriebseinrichtung ansteuert, welche die Festkörperaktoren aufweist, zum Versetzen der Welle in eine Wellenrotation um die Wellenachse, wobei die Steuereinrichtung eine auf die Welle oder eine relativ zur Welle auf ein Gehäuse der Festkörperaktor-Antriebsvorrichtung wirkende Last als den Lastwert erfasst und bestimmt.

Bevorzugt wird insbesondere ein solches Verfahren, bei dem als Richtgröße eine Veränderung der Festkörperaktorspannung $\Delta U_{Piezo}$ über einen vorgegebenen Zeitraum T bestimmt wird gemäß

$$\Delta U_{Piezo} = U_{Piezo(0)}$$
$$- \sqrt{\frac{2}{C_{Piezo}} \left( \frac{C_{Piezo} U_{Piezo(0)}^2}{2} + \sum_{i=1}^{n_{Lade(0 \to T)}} W_{Lade(i)} + \sum_{i=1}^{n_{Entlade(0 \to T)}} W_{Entlade(i)} + \int_0^T P_{mech(t)} dt + \int_0^T P_{elekt(t)} dt \right)}$$

mit $U_{Piezo\,(0)}$ als Festkörperaktorspannung zu einem ersten Zeitpunkt t = 0, einer Großsignalkapazität $C_{Piezo}$ des Festkörperaktors, einer Anzahl $n_{Lade(0 \to T)}$ von eingeladenen Energiewerten oder Energiepulsen $W_{Lade(i)}$ variabler Größe im Zeitraum T, einer Anzahl $n_{Entlade\,(0 \to T)}$ von ausgeladenen Energiewerten oder Energiepulsen $W_{Entlade(i)}$ mit variabler Größe im Zeitraum T sowie mechanischen Leistungen $P_{mech(t)}$ und elektrischen Leistungen $P_{elekt(t)}$, welche als physikalische Größen im Zeitraum T auf die Festkörperaktoren einwirken.

Durch eine energiebasierte getaktete Leistungs-Endstufe wird eine Festkörperaktor-Antriebsvorrichtung vorteilhaft durch eine "schwebende" Ansteuerung des mindestens einen Festkörperaktors, insbesondere piezoelektrischen Aktors durch Energiepakete betrieben, wobei eine Auswertung der mechanischen Leistungsabgabe der Festkörperaktor-Antriebsvorrichtung durch eine Messung der Offsetverschiebung der Piezospannung durchgeführt wird. Durch die schwebende Ansteuerung besteht im Fall einer wirkenden Last die Möglichkeit des Abfallens einer Offset- bzw. Differenzspannung. Im Fall eines Piezo-Festkörperaktors wird ein Piezostack von diesem, der in erster Näherung als elektrische Kapazität beschrieben werden kann, indirekt als Integrator genutzt. Durch den Vergleich der Energie- bzw. Ladungsbilanz kann sowohl die mechanische Leistungsabgabe der Festkörperaktor-Antriebsvorrichtung und deren Änderung, als auch die Temperatur des jeweiligen PiezoAktors und damit des z.B. Piezo-Ringmotors gemessen werden.

Eine solche energiebasierte getaktete Leistungs-Endstufe für eine Festkörperaktor-Antriebsvorrichtung in Art z.B. eines piezoelektrischen Ringmotors ist daher als kleiner, leistungsstarker und intelligenter Stellantrieb vorteilhaft einsetzbar in z.B. der Automobiltechnik, der Gebäudetechnik und der Automatisierungstechnik. Durch die gleichzeitige Verwendung der Antriebspiezos für sensorische Zwecke werden Funktionen wie Lastdetektion und Motorüberwachung ohne externe Sensorik realisiert. Dieses wird für die meisten kommerziellen Applikationen wie z.B. als Fensterheberoder Schiebedachmotor gefordert, z.B. um eine Einklemmschutzfunktion zu ermöglichen. Die Umsetzung erfolgt insbesondere durch den Einsatz elektronischer Verfahren und Auswertealgorithmen zur differenziellen Leistungsmessung, welche auf diesen festkörperaktorischen Antrieb anwendbar sind.

Neben dem Einsatz einer solchen Endstufe mit einer derartigen Steuereinrichtung zum Bestimmen einer mechanischen Last bzw. Wirkleistung auf die Antriebsvorrichtung können mit einer solchen Anordnung auch Temperaturen in der Antriebsvorrichtung gemessen werden.

Alternativ zu piezoelektrischen Festkörperaktoren können als Antriebselemente aber auch beliebige andere Festkörperaktoren eingesetzt werden, z. B. elektrostriktive oder magnetostriktive Aktoren.

Ein Ausführungsbeispiel wird nachfolgend anhand der Zeichnung näher erläutert. Es zeigt:

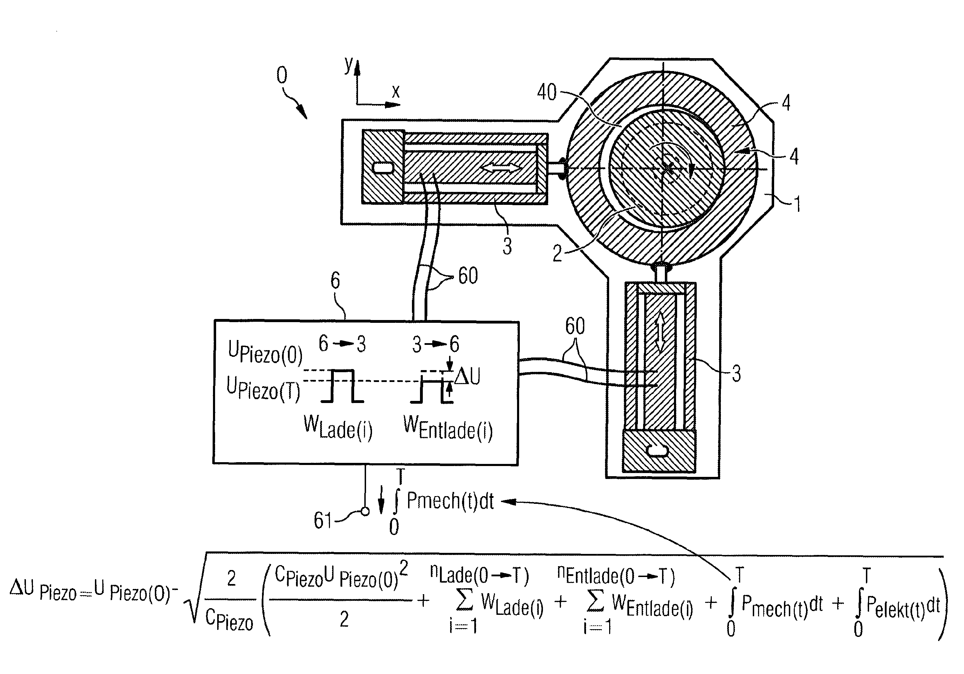

Fig. 1    in Schnittansicht eine Draufsicht auf eine Festkörpe- raktor-Antriebsvorrichtung mit einer Welle und mit einer Schaltungsanordnung zum Ansteuern der Festkör- peraktor-Antriebsvorrichtung und zum Erfassen einer auf die Welle wirkenden Last.

Wie dies aus Fig. 1 ersichtlich ist, besteht eine beispielhafte Festkörperaktor-Antriebsvorrichtung 0 aus einer Vielzahl von Einzelkomponenten, wobei die dargestellten Komponenten um weitere Komponenten ergänzbar sind bzw. gegen gleich wirkende Komponenten anderer Bauart austauschbar sind.

Die Festkörperaktor-Antriebsvorrichtung 0 weist ein Gehäuse 1 auf, welches die weiteren Komponenten aufnimmt. In dem Gehäuse 1 ist mittels einer Lageranordnung eine Welle 2 gelagert, wobei sich eine Wellenachse der Welle 2 in axialer Richtung aus dem Gehäuse 1 heraus erstreckt. Zum Versetzen der Welle 2 um die Wellenachse in eine Wellenrotation dient eine Antriebsvorrichtung. Die Antriebsvorrichtung besteht im Wesentlichen aus vorzugsweise zwei oder mehr Festkörperaktoren 3 und einem Antriebskörper 4, welcher über die Festkörperaktoren 3 fest mit einer Innenwandung des Gehäuses 1 verbunden ist. Die Festkörperaktoren 3 sind dabei derart angeordnet, dass sie den Antriebskörper 4 relativ zu dem Gehäuse 1 in eine Translationsbewegung in einer Ebene x, y senkrecht zu der axialen Richtung versetzen. Die Translation versetzt den Antriebskörper 4 dabei in eine Hin- und Herbewegung, vorteilhafterweise in eine kreisähnliche Bewegung. Der Antriebskörper 4 weist eine Öffnung 40 auf, welche insbesondere als Durchgangsöffnung ausgebildet ist. Durch die Öffnung 40 des Antriebskörpers 4 führt die Welle 2 hindurch, wobei der Außendurchmesser der Welle 2 geringer als der Innendurchmesser der Öffnung 40 des Antriebskörpers 4 ist. Der Antriebskörper 4 wird durch die Festkörperaktoren 3 derart verstellt, dass eine Wellen-Außenwandung vorzugsweise durchgehend mit einer Antriebskörper-Innenwandung in Reibkontakt steht, so dass durch die Bewegung des Antriebskörpers 4 die Welle 2 in die Wellenrotation versetzt wird.

Zum Antreiben der Festkörperaktoren 3 weist die Festkörperaktor-Antriebsvorrichtung 0 eine Steuereinrichtung 6 als integrierte oder gegebenenfalls auch eigenständige externe Komponente auf. Die Steuereinrichtung 6 ist über Leiter 60 mit den Festkörperaktoren 3 verbunden, um an den Festkörperaktoren 3 Ladungen bzw. Spannungen anzulegen, damit sich Festkörperaktoren 3 entsprechend der Ansteuerung ausdehnen oder gegebenenfalls auch zusammenziehen. Da die Festkörperaktoren 3 als kapazitive Komponenten angesehen werden können, weist die Steuereinrichtung 6 eine induktive Komponente, insbesondere eine Spule auf, von welcher aus Energiepakete $W_{Lade(i)}$ zu den Festkörperaktoren 3 zu deren Aufladung übertragen werden. Zum Rückstellen der Festkörperaktoren 3 wird die entsprechend eingespeiste Energie wieder zurückgeladen, insbesondere in Form eines Energiepaketes $W_{Entlade(i)}$ zurückgeladen.

Die Steuereinrichtung 6 umfasst eine gegebenenfalls auch rechnertechnisch umgesetzte Detektorschaltung, welche eine Energiedifferenz, eine Leistungsdifferenz oder eine Potentialdifferenz $\Delta U$ zwischen den über einen festlegbaren Zeitraum T eingespeisten und zurückgespeisten Leistungen ermittelt. Letztendlich kann daraus auf eine mechanische Leistung $P_{mech(t)}$ der Festkörperaktor-Antriebsvorrichtung 0 und weitere Faktoren geschlossen werden. Derartige bestimmte Faktoren können direkt von der Steuereinrichtung 6 zum Regeln der Festkörperaktor-Antriebsvorrichtung 0 verwendet werden und/oder über beispielsweise einen Abgriff 61 zur Verwertung durch andere Verfahren, Komponenten oder Vorrichtungen bereitgestellt werden.

Ein an der Welle 2 angreifendes Wellen-Drehmoment wird im Kontaktpunkt zwischen der Antriebskörper- Innenwandung des Antriebskörpers 4 und der Welle 2 in Form einer tangential gerichteten Kraft auf die Antriebskörper- Innenwandung übertragen und bewirkt dort ein üblicherweise etwa gleich großes Antriebskörper-Drehmoment bezüglich des Mittelpunktes des Antriebskörpers 4. Das Antriebskörper-Drehmoment wird über den Antriebskörper 4 je nach Wirkrichtung auf alle oder einen Teil der Festkörperaktoren 3 übertragen und letztendlich von den Festkörperaktoren 3 auf das Gehäuse 1 übertragen.

Der Zusammenhang zwischen Ladung und Kraft bzw. Spannung und Kraft ist nahezu linear. Ladungen bzw. Spannungen, welche durch Lasten induziert werden, sind mittels geeigneter elektronischer Schaltungen durch die Steuereinrichtung 6 elektronisch leicht auswertbar.

Das Wirkprinzip einer energiebasierten bzw. energiegesteuerten und getakteten Endstufe wird derart modifiziert, dass eine differenzielle Wirkleistungsbestimmung durchgeführt werden kann, indem periodisch die von einem oder mehreren der Festkörperaktoren 3 aufgenommene und zurück gespeiste elektrische Energie miteinander verglichen wird. Die Umsetzung erfolgt besonders bevorzugt im Rahmen einer Ring-Festkörperaktor-Antriebsvorrichtung.

Die Festkörperaktoren 3, insbesondere in Form piezoelektrischer Festkörperaktoren des piezoelektrischen Ringmotors, werden mit sinusförmigen Spannungen angesteuert. Diese Spannungen können in eine Lade- und Entladephase unterteilt werden, z.B. cos (0°..180°) für das Laden und cos(180°...360°) für das Entladen. Zum kontinuierlichen Betrieb des Motors bzw. der Antriebsvorrichtung wird der ganze Vorgang periodisch wiederholt. Ein als geeignet ermitteltes Energiepulsprofil der beiden Phasen Laden und Entladen wird in der Endstufe abgelegt. Zu Beginn einer Periode 0°...360° wird die Spannung U(i) z.B. bei der Phasenlage 0° bestimmt. Nach einer kompletten Periode 360° wird die Spannung U(i+1) erneut ermittelt. Liegt diese Spannung U(i+1) unterhalb des Startwertes, so ist dies ein Indiz dafür, dass die Antriebsvorrichtung gegen eine höhere mechanische Last gearbeitet und mehr Wirkleistung abgegeben hat. Liegt die Spannung jedoch höher als zu Beginn des vorherigen Arbeitszyklus, bedeutet dies umgekehrt, dass der Motor eine mechanische Leistung aufgenommen hat.

Im Unterschied zu dem Ansteuermodus von Injektoren, werden die Piezoaktoren am Ende einer Arbeitsperiode zweckmäßigerweise nicht durch Kurzschließen völlig entladen, da die Offsetspannung gerade die Informationen über die vom Piezo-Ringmotor geleistete mechanische Arbeit sowie dessen Temperatur enthält. Um hierbei ein "Davonlaufen" der Piezospannung $U_{Piezo}$ zu vermeiden, werden die Größen Ladepulse oder Entladepulse um einen Faktor korrigiert, was einer Offsetkorrektur entspricht. Ein solcher Regelfaktor lässt einen unmittelbaren Rückschluss auf die mechanische Energieabgabe der Festkörper-Antriebsvorrichtung zu.

Durch eine differenzielle Änderung des Regelfaktors kann dabei zwischen üblicherweise sich nur langsam ändernden thermischen und plötzlich auftretenden mechanischen Änderungen unterschieden werden. Durch die Verwendung einer getakteten e-nergiegesteuerten Endstufe in Verbindung mit einer Spannungsmessung lässt sich somit eine genaue differenzielle Leistungsmessung ohne großen Aufwand realisieren.

Als Richtgröße wird vorteilhafterweise eine Veränderung der Festkörperaktorspannung, z.B. der Piezospannung $\Delta U_{Piezo}$ über einen vorgegebenen Zeitraum T bestimmt. Die Veränderung der Festkörperaktorspannung, z.B. der Piezospannung $\Delta U_{Piezo}$ lässt sich beschreiben durch

$$\Delta U_{Piezo} = U_{Piezo(0)} - \sqrt{\frac{2}{C_{Piezo}}\left(\frac{C_{Piezo}U_{Piezo(0)}^2}{2} + \sum_{i=1}^{n_{Lade(0\to T)}} W_{Lade(i)} + \sum_{i=1}^{n_{Entlade(0\to T)}} W_{Entlade(i)} + \int_0^T P_{mech(t)}dt + \int_0^T P_{elekt(t)}dt\right)}$$

Dazu wird die Festkörperaktorspannung bzw. Piezospannung $U_{Pie\text{-}zo\,(0)}$ über einen vorgegebenen Zeitraum T zu einem ersten Zeitpunkt t = 0 und zu einem späteren Zeitpunkt T bestimmt, so dass diese Größen bekannt sind. In die Spannung zum späteren Zeitpunkt gehen verschiedene Faktoren ein, welche durch den Wurzelausdruck beschrieben werden.

Bekannt oder bestimmbar ist eine Großsignalkapazität $C_{Piezo}$ des Festkörperaktors. Die Großsignalkapazität $C_{Piezo}$ ist temperaturabhängig und ändert sich über die Zeit nur langsam, so dass der Einfluss innerhalb des bevorzugten Zeitraums T vernachlässigbar ist. Über eine Änderung der Festkörperaktorspannung $U_{Piezo(0)}$ über eine Vielzahl solcher Zeiträume kann aber auch auf Temperaturänderungen geschlossen werden.

Während des Zeitraums T wird in beliebiger Reihenfolge eine Anzahl $n_{Lade(0\to T)}$ von geladenen Energiepaketen $w_{Lade(i)}$ variabler Größe und eine Anzahl $n_{Entlade(0\to T)}$ von zurückgeladenen bzw. ausgeladenen Energiepaketen $W_{Entlade(i)}$ variabler Größe aufaddiert, was in dem Wurzelausdruck berücksichtigt ist. Die Energiewerte zum Laden werden von der Endstufe getaktet bereitgestellt und in den oder die Festkörperaktoren 3 eingespeist. Die Energiewerte $W_{Entlade(i)}$ beim Entladen sind aufgrund verschiedener Effekte, z.B. einem Hystereseverhalten und durch Wärmeaufladung, einem pyroelektrischen Effekt, generell geringer als die Energiewerte $W_{Lade(i)}$ beim Laden. Z.B. wird jeweils ein Energiepaket mit 100 mJ von einer Induktivität, z.B. einer Spule in einen Festkörperaktor bzw. in dessen Kapazität eingeladen, aber nur ein Energiepaket mit 80 mJ herausgeladen. Der Zeitraum T wird vorteilhafterweise so gewählt, dass auch diese Energiedifferenz der aufaddierten Energiewerte $W_{Lade(i)}$, $W_{Entlade(i)}$ einem bekannten oder bestimmten konstanten Wert entspricht.

Als weitere Größe gehen in den Wurzelausdruck über den Zeitraum T integrierte mechanische Leistungen $P_{mech(t)}$ ein. Diese ändern sich abhängig von Lasten welche auf die Festkörperaktor-Antriebsvorrichtung einwirken und werden entsprechend in der Steuereinrichtung 6 bestimmt bzw. berechnet.

Als weitere Größe gehen in den Wurzelausdruck über den Zeitraum T integrierte elektrische Leistungen $P_{elekt(t)}$ ein. Diese stehen in Wechselwirkung mit den mechanischen Leistungen $P_{mech(t)}$ und stellen Verluste durch Leiter, Kontakte etc. dar. Gegenüber den mechanischen Leistungen $P_{mech(t)}$ sind die elektrischen Leistungen $P_{elekt(t)}$ jedoch üblicherweise vernachlässigbar.

Da die in den Wurzelausdruck eingehenden Größen, welche zueinander additive Ausdrücke bilden, abgesehen von den mechanischen Leistungen $P_{mech(t)}$ über den Zeitraum T vernachlässigbare Größen bilden, kann die Formel zur Bestimmung der mechanischen Leistungen $P_{mech(t)}$, welche auf die Festkörperaktor-Antriebsvorrichtung einwirken, einfach umgestellt werden.

Unter Einwirken einer Leistung wird neben einer gewünschten Last eines zu verstellenden Objekts insbesondere auch eine unerwünschte Last durch eine Störung verstanden. Neben der Steuerung oder Regelung eines gewünschten Betriebs sind daher auch Maßnahmen im Fall eines gestörten Betriebs durch die Steuereinrichtung veranlassbar.

Das Wirkprinzip ist z.B. mit Hilfe einer getakteten diskontinuierlichen Endstufe, durch welche mittels einer Spule ein Strom immer wieder in einen kapazitiv wirkenden Festkörperaktor geregelt wird, umsetzbar.

Aufgrund unterschiedlicher Zeitkonstanten lassen sich mit der Anordnung bzw. einer entsprechenden Verfahrensweise verschiedene Fälle unterscheiden und elektronisch auswerten. Gemäß der bevorzugten Ausführungsform lassen sich konstante mechanische Lasten sowie kontinuierliche Änderungen der mechanischen Last bestimmen. Dies sind insbesondere konstante oder sich kontinuierlich ändernde Brems- oder Beschleunigungsmomente, welche auf die Welle 2 und/oder das Gehäuse 1 relativ zur Welle 2 der Festkörperaktor-Antriebsvorrichtung 0 einwirken. Feststellbar sind auch sprungartige Laständerungen, d. h. plötzliche Beschleunigungs- oder Bremsmomente, wie sie bei einer Blokkierung entstehen können, sowie extrem ausgeprägte positive oder negative Lasten. Außerdem bestimmbar sind eine Temperatur und Temperaturänderungen der Festkörperaktoren und damit der Festkörperaktor-Antriebsvorrichtung.

**Patentansprüche**

1.  Festkörperaktor-Antriebsvorrichtung (0) mit einer energiebasierte getaktete Leistungs-Endstufe mit

    - einem oder mehreren Festkörperaktoren (3) und
    - einer Steuereinrichtung (6) zum Einladen von Energie ($W_{La-de(i)}$) in den oder die Festkörperaktoren (3) und zum Ausladen von Energie ($W_{Entlade(i)}$) aus dem oder den Festkörperaktoren (3),
    **dadurch gekennzeichnet, dass**
    - die Steuereinrichtung (6) ausgebildet oder ausgelegt ist zum Bestimmen eines Lastwertes ($P_{mech(t)}$) und/oder einer Temperatur, welche in dem oder den Festkörperaktoren (3) wirken,
    - wobei eine Festkörperaktorspannung (Upiezo) über mindestens einen der Festkörperaktoren zu einem ersten Zeitpunkt (t = 0) und zu einem späteren Zeitpunkt über einen Zeitraum (T) gemessen wird und
    - als Richtgröße zum Bestimmen des Lastwertes ($P_{mech(t)}$) und/oder der Temperatur eine Veränderung der Festkörperaktorspannungen (ΔUpiezo) gebildet wird aus der Differenz der Festkörperaktorspannungen (Upiezo) zu den verschiedenen Zeitpunkten.

2.  Festkörperaktor-Antriebsvorrichtung nach Anspruch 1, bei welcher die Steuereinrichtung (6) ausgelegt ist zum Messen der Veränderung der Festkörperaktorspannung ΔUpiezo, als Differenz der Festkörperaktorspannung (Upiezo) über mindestens einen Festkörperaktor zu Beginn des Aufladens des Festkörperaktors und der Festkörperaktorspannung (Upiezo) über dem Festkörperaktor zum Ende des Entladens des Festkörperaktor.

3.  Festkörperaktor-Antriebsvorrichtung nach Anspruch 1 oder 2, bei welcher die Steuereinrichtung (6) ausgebildet und ausgelegt ist, Energiepakete zwischen einer induktiven Komponente der Steuereinrichtung (6) und den Festkörperaktoren (3) hin und her zu laden.

4.  Festkörperaktor-Antriebsvorrichtung nach einem vorstehenden Anspruch mit

    - einer Welle (2) mit einer Wellenachse und
    - einer Antriebseinrichtung (4), welche die Festkörperaktoren (3) aufweist, zum Versetzen der Welle (2) in eine Wellenrotation um die Wellenachse,
    - wobei die Steuereinrichtung (6) zum Erfassen und Bestimmen einer auf die Welle (2) oder einer relativ zur Welle auf ein Gehäuse (1) der Festkörperaktor-Antriebsvorrichtung wirkenden Last als dem. Lastwert ($P_{mech(t)}$) ausgebildet oder ausgelegt ist.

5.  Festkörperaktor-Antriebsvorrichtung nach einem vorstehenden Anspruch, bei welcher als Richtgröße zum Bestimmen des Lastwertes ($P_{mech(t)}$) und/oder der Temperatur eine Veränderung der Festkörperaktorspannung $\Delta U_{Piezo}$ über einen vorgegebenen Zeitraum T bestimmt wird gemäß

$$\Delta U_{Piezo} = U_{Piezo(0)} - \sqrt{\frac{2}{C_{Piezo}}\left(\frac{C_{Piezo}U_{Piezo(0)}^2}{2} + \sum_{i=1}^{n_{Lade(0\rightarrow T)}} W_{Lade(i)} + \sum_{i=1}^{n_{Entlade(0\rightarrow T)}} W_{Entlade(i)} + \int_0^T P_{mech(t)}dt + \int_0^T P_{elekt(t)}dt\right)}$$

mit $U_{Piezo(0)}$ als Festkörperaktorspannung zu einem ersten Zeitpunkt t = 0, einer Großsignalkapazität $C_{piezo}$ des Festkörperaktors (3), einer Anzahl $n_{Lade(0 \to T)}$ von eingeladenen Energiewerten oder Energiepulsen $W_{Lade(i)}$ variabler Größe im Zeitraum T, einer Anzahl $n_{Entlade(0 \to T)}$ von ausgeladenen Energiewerten oder Energiepulsen $W_{Entlade(i)}$ mit variabler Größe im Zeitraum T sowie mechanischen Leistungen $P_{mech(t)}$ und elektrischen Leistungen $P_{elekt(t)}$, welche als physikalische Größen im Zeitraum T auf die Festkörperaktoren (3) einwirken.

6. Verfahren zum Steuern einer energiebasierten getakteten Leistungs-Endstufe für eine Festkörperaktor-Antriebsvorrichtung (0) mit einem oder mehreren Festkörperaktoren (3), bei dem eine Steuereinrichtung (6) zum Einladen von Energie ($W_{Lade(i)}$) in den oder die Festkörperaktoren (3) und zum Ausladen von Energie ($W_{Entlade(i)}$) aus dem oder den Festkörperaktoren (3) verwendet wird,
**dadurch gekennzeichnet, dass**

- die Steuereinrichtung (6) einen Lastwert ($P_{mech(t)}$) und/oder eine Temperatur bestimmt, welche in dem oder den Festkörperaktoren (3) wirken, wobei
- wobei eine Festkörperaktorspannung (Upiezo) über mindestens einen der Festkörperaktoren zu einem ersten Zeitpunkt (t = 0) und zu einem späteren Zeitpunkt über einen Zeitraum (T) gemessen wird und
- als Richtgröße zum Bestimmen des Lastwertes ($P_{mech(t)}$) und/oder der Temperatur eine Veränderung der Festkörperaktorspannungen ($\Delta$Upiezo) gebildet wird aus der Differenz der Festkörperaktorspannungen (Upiezo) zu den verschiedenen Zeitpunkten.

7. Verfahren nach Anspruch 6, bei welchem die Steuereinrichtung (6) eine Veränderung der Festkörperaktorspannung ($\Delta$Upiezo), als Differenz der Festkörperaktorspannungen (Upiezo) über mindestens einen Festkörperaktor zu Beginn des Aufladens des Festkörperaktors und der Festkörperaktorspannungen (Upiezo) über dem Festkörperaktor zum Ende des Entladens des Festkörperaktor bestimmt.

8. Verfahren nach Anspruch 6 oder 7, bei welchem Energiepakete zwischen einer induktiven Komponente der Steuereinrichtung (6) und den Festkörperaktoren (3) hin und her geladen werden.

9. Verfahren nach einem der Ansprüche 6 - 8, bei dem die Steuereinrichtung ansteuert eine Festkörperaktor-Antriebsvorrichtung (0) mit einer Welle (2) mit einer Wellenachse und mit einer Antriebseinrichtung (4), welche die Festkörperaktoren (3) aufweist, zum Versetzen der Welle (2) in eine Wellenrotation um die Wellenachse, wobei die Steuereinrichtung (6) eine auf die Welle (2) oder eine relativ zur Welle auf ein Gehäuse (1) der Festkörperaktor-Antriebsvorrichtung wirkende Last als den Lastwert ($P_{mech(t)}$) erfasst und bestimmt.

10. Verfahren nach einem der Ansprüche 6 - 9, bei dem als Richtgröße eine Veränderung der Festkörperaktorspannung $\Delta U_{Pie-zo}$ über einen vorgegebenen Zeitraum T bestimmt wird gemäß

$$\Delta U_{Piezo} = U_{Piezo(0)} - \sqrt{\frac{2}{C_{Piezo}}\left(\frac{C_{Piezo}U_{Piezo(0)}^2}{2} + \sum_{i=1}^{n_{Lade(0 \to T)}} W_{Lade(i)} + \sum_{i=1}^{n_{Entlade(0 \to T)}} W_{Entlade(i)} + \int_0^T P_{mech(t)}dt + \int_0^T P_{elekt(t)}dt\right)}$$

- mit $U_{Piezo(0)}$ als Festkörperaktorspannung zu einem ersten Zeitpunkt t = 0, einer Großsignalkapazität $C_{piezo}$ des Festkörperaktors (3), einer Anzahl $n_{Lade(0 \to T)}$ von eingeladenen Energiewerten oder Energiepulsen $W_{Lade(i)}$ variabler Größe im Zeitraum T, einer Anzahl $n_{Entlade(0 \to T)}$ von ausgeladenen Energiewerten oder Energiepulsen $W_{Entlade(i)}$ mit variabler Größe im Zeitraum T sowie mechanischen Leistungen $P_{mech(t)}$ und elektrischen Leistungen $P_{elekt(t)}$, welche als physikalische Größen im Zeitraum T auf die Festkörperaktoren (3) einwirken,
- wobei eine Festkörperaktorspannung (Upiezo) über mindestens einen der Festkörperaktoren zu einem ersten Zeitpunkt (t = 0) und zu einem späteren Zeitpunkt über einen Zeitraum (T) gemessen wird und
- als Richtgröße zum Bestimmen des Lastwertes ($P_{mech(t)}$) und/oder der Temperatur eine Veränderung der Festkörperaktorspannungen ($\Delta$Upiezo) gebildet wird aus der Differenz der Festkörperaktorspannungen (Upiezo) zu den verschiedenen Zeitpunkten.

**Claims**

1. Solid-state actuator drive device (0) with an energy-based clocked power output stage having

   - one or more solid-state actuators (3) and
   - a control device (6) for charging energy ($W_{Charge\ (i)}$) into the solid-state actuator(s) (3) and for discharging energy ($W_{Discharge\ (i)}$) from the solid-state actuator (s) (3), **characterised in that**
   - the control device (6) is embodied or arranged to determine a load value ($P_{mech(t)}$) and/or a temperature which act in the solid-state actuator(s) (3),
   - a solid-state actuator voltage (Upiezo) across at least one of the solid-state actuators being measured at a first instant (t = 0) and at a later instant over a period (T) and
   - as a recommended quantity for determining the load value ($P_{mech(t)}$) and/or the temperature, a change of the solid-state actuator voltages (ΔUpiezo) being obtained from the difference of the solid-state actuator voltages (Upiezo) at the different instants.

2. Solid-state actuator drive device according to Claim 1, in which the control device (6) is arranged to measure the change of the solid-state actuator voltage ΔUpiezo as a difference of the solid-state actuator voltage (Upiezo) across at least one solid-state actuator at the start of the charging of the solid-state actuator and the solid-state actuator voltage (Upiezo) across the solid-state actuator at the end of the discharging of the solid-state actuator.

3. Solid-state actuator drive device according to Claim 1 or 2, in which the control device (6) is embodied and arranged to charge packets of energy to and fro between an inductive component of the control device (6) and the solid-state actuators (3).

4. Solid-state actuator drive device according to a preceding claim having

   - a shaft (2) with a shaft axis and
   - a drive device (4), having the solid-state actuators (3), for setting the shaft (2) in a shaft rotation about the shaft axis,
   - the control device (6) being embodied or arranged to acquire and determine, as the load value ($P_{mech(t)}$), a load acting on the shaft (2) or a load acting, relative to the shaft, on a housing (1) of the solid-state actuator drive device.

5. Solid-state actuator drive device according to a preceding claim, in which, as a recommended quantity for determining the load value ($P_{mech(t)}$) and/or the temperature, a change of the solid-state actuator voltage $\Delta U_{Piezo}$ over a preset period T is determined according to

$$\Delta U_{Piezo} = U_{Piezo(0)}$$

$$-\sqrt{\frac{2}{C_{Piezo}}\left(\frac{C_{Piezo}U_{Piezo(0)}^2}{2} + \sum_{i=1}^{n\,Charge(0\to T)} W_{Charge(i)} + \sum_{i=1}^{n\,Discharge(0\to T)} W_{Discharge(i)} + \int_0^T P_{mech(t)}\,dt + \int_0^T P_{elect(t)}\,dt\right)}$$

with $U_{Piezo\ (0)}$ as a solid-state actuator voltage at a first instant t = 0, a large-signal capacitance $C_{piezo}$ of the solid-state actuator (3), a number $n_{Charge(0\to T)}$ of charged energy values or energy pulses $W_{charge(i)}$ of variable size in the period T, a number $n_{Discharge\ (0\to T)}$ of discharged energy values or energy pulses $W_{Discharge\ (i)}$ of variable size in the period T, and mechanical power $P_{mech(t)}$ and electrical power $P_{elect(t)}$, which act on the solid-state actuators (3) as physical quantities in the period T.

6. Method for controlling an energy-based clocked power output stage for a solid-state actuator device (0) having one or more solid-state actuators (3), in which a control device (6) is used for charging energy ($W_{charge(i)}$) into the solid-state actuator(s) (3) and for discharging energy ($W_{Discharged(i)}$) from the solid-state actuator (s) (3), **characterised in that**

   - the control device (6) determines a load value ($P_{mech(t)}$) and/or a temperature which act in the solid-state actuator(s) (3),

- a solid-state actuator voltage (Upiezo) across at least one of the solid-state actuators being measured at a first instant (t = 0) and at a later instant over a period (T) and

- as a recommended quantity for determining the load value ($P_{mech(t)}$) and/or the temperature, a change of the solid-state actuator voltages (ΔUpiezo) being obtained from the difference of the solid-state actuator voltages (Upiezo) at the different instants.

7. Method according to Claim 6, in which the control device (6) determines a change of the solid-state actuator voltage (ΔUpiezo) as a difference of the solid-state actuator voltages (Upiezo) across at least one solid-state actuator at the start of the charging of the solid-state actuator and the solid-state actuator voltages (Upiezo) across the solid-state actuator at the end of the discharging of the solid-state actuator.

8. Method according to Claim 6 or 7, in which packets of energy are charged to and fro between an inductive component of the control device (6) and the solid-state actuators (3).

9. Method according to one of Claims 6 - 8, in which the control device controls a solid-state actuator drive device (0) having a shaft (2) with a shaft axis and having a drive device (4), having the solid-state actuators (3), for setting the shaft (2) in a shaft rotation about the shaft axis, the control device (6) acquiring and determining, as the load value ($P_{mech(t)}$), a load acting on the shaft (2) or a load acting, relative to the shaft, on a housing (1) of the solid-state actuator drive device.

10. Method according to one of Claims 6 - 9, in which, as a recommended quantity, a change of the solid-state actuator voltage $\Delta U_{Piezo}$ over a preset period T is determined according to

$$\Delta U_{Piezo} = U_{Piezo(0)} - \sqrt{\frac{2}{C_{Piezo}}\left(\frac{C_{Piezo}U_{Piezo(0)}^2}{2} + \sum_{i=1}^{n_{Charge(0\to T)}} W_{Charge(i)} + \sum_{i=1}^{n_{Discharge(0\to T)}} W_{Discharge(i)} + \int_0^T P_{mech(t)}dt + \int_0^T P_{elect(t)}dt\right)}$$

- with $U_{Piezo(0)}$ as a solid-state actuator voltage at a first instant t = 0, a large-signal capacitance $C_{Piezo}$ of the solid-state actuator (3), a number $n_{Charge(0\to T)}$ of charged energy values or energy pulses $N_{charge(i)}$ of variable size in the period T, a number $n_{Discharge(0\to T)}$ of discharged energy values or energy pulses $W_{Discharged(i)}$ of variable size in the period T, and mechanical power $P_{mech(t)}$ and electrical power $P_{elect(t)}$, which act on the solid-state actuators (3) as physical quantities in the period T,

- a solid-state actuator voltage (Upiezo) across at least one of the solid-state actuators being measured at a first instant (t = 0) and at a later instant over a period (T) and

- as a recommended quantity for determining the load value ($P_{mech(t)}$) and/or the temperature, a change of the solid-state actuator voltages (ΔUpiezo) being obtained from the difference of the solid-state actuator voltages (Upiezo) at the different instants.

## Revendications

1. Dispositif d'entrainement à actionneur à corps solide (0) avec un étage final de puissance cadencé basé sur une quantité d'énergie comprenant

- un ou plusieurs actionneurs à corps solide (3) et
- un dispositif de contrôle (6) pour charger de l'énergie ($W_{Lade(i)}$) dans le ou les actionneurs à corps solide (3) et pour décharger de l'énergie ($W_{Entlade(i)}$) du ou des actionneurs à corps solide (3),
**caractérisé en ce que**
- le dispositif de contrôle (6) est formé ou conçu pour déterminer une valeur de charge ($P_{mech(t)}$) et/ou une température qui opèrent dans le ou les actionneurs à corps solide (3),
- une tension d'actionneur à corps solide (Upiezo) étant mesurée sur au moins un des actionneurs à corps solide à un premier moment (t = 0) et à un moment ultérieur pendant une durée (T) et
- une variation des tensions d'actionneurs à corps solide (ΔUpiezo) étant déterminée en tant que valeur de référence pour déterminer la valeur de charge $P_{mech(t)}$ et/ou la température à partir de la différence des tensions d'actionneur à corps solide (Upiezo) aux différents moments.

2. Dispositif d'entraînement à actionneur à corps solide selon la revendication 1, dans lequel le dispositif de contrôle (6) est conçu pour mesurer la variation de la tension d'actionneur à corps solide ΔUpiezo, en tant que différence de la tension d'actionneur à corps solide (Upiezo) sur au moins un actionneur à corps solide au début du chargement de l'actionneur à corps solide et de la tension d'actionneur à corps solide (Upiezo) sur l'actionneur à corps solide à la fin du déchargement de l'actionneur à corps solide,

3. Dispositif d'entraînement à actionneur à corps solide selon la revendication 1 ou 2, dans lequel le dispositif de contrôle (6) est formé et conçu pour charger des paquets d'énergie entre une composante inductive du dispositif de contrôle (6) et les actionneurs à corps solide (3) dans les deux sens,

4. Dispositif d'entrainement à actionneur à corps solide selon l'une des revendications précédentes comprenant un arbre (2) avec un axe d'arbre et

    - un dispositif d'entraînement (4) lequel comporte les actionneurs à corps solide (3), pour mettre l'arbre (2) en rotation d'arbre autour de l'axe d'arbre,
    - le dispositif de contrôle (6) étant formé ou conçu pour relever et déterminer une charge en tant que valeur de charge ($P_{mech(t)}$) opérant sur l'arbre (2) ou relativement à l'arbre sur un logement (1) du dispositif d'entraînement à actionneur à corps solide.

5. Dispositif d'entraînement à actionneur à corps solide selon l'une des revendications précédentes, dans lequel une variation de la tension d'actionneur à corps solide ΔUpiezo est déterminée pendant une durée T déterminée en tant que valeur de référence pour déterminer la valeur de charge $P_{mech(t)}$ et/ou la température selon

$$\Delta U_{Piezo} = U_{Piezo(0)} - \sqrt{\frac{2}{C_{Piezo}}\left(\frac{C_{Piezo}U_{Piezo(0)}^{2}}{2} + \sum_{i=1}^{n_{Lade(0\rightarrow T)}}W_{Lade(i)} + \sum_{i=1}^{n_{Entlade(0\rightarrow T)}}W_{Entlade(i)} + \int_{0}^{T}P_{mech(t)}dt + \int_{0}^{T}P_{elekt(t)}dt\right)}$$

où $U_{Piezo(0)}$ est la tension d'actionneur à corps solide à un premier moment t = 0, $C_{Piezo}$ est une capacité de grand signal de l'actionneur à corps solide (3), $n_{Lade(0\rightarrow T)}$ est un nombre de valeurs d'énergie chargées ou d'impulsions d'énergie $W_{Lade(i)}$ de grandeur variable pendant la durée T, $n_{Entlade(0\rightarrow T)}$ est un nombre de valeurs d'énergie déchargées ou d'impulsions d'énergie $W_{Entlade(i)}$ de grandeur variable pendant la durée T, et $P_{mech(t)}$ sont des puissances mécaniques et $P_{elek(t)}$ des puissances électriques qui opèrent pendant la durée T sur les actionneurs à corps solide (3) en tant que grandeurs physiques.

6. Méthode pour contrôler un étage final de puissance cadencé basé sur une quantité d'énergie d'entraînement pour un dispositif d'entraînement à actionneur à corps solide (0) comprenant un ou plusieurs actionneurs à corps solide (3), dans laquelle un dispositif de contrôle (6) est utilisé pour charger de l'énergie ($W_{Lade(i)}$) dans le ou les actionneurs à corps solide (3) et pour décharger de l'énergie ($W_{Entlade(i)}$) du ou des actionneurs à corps solide,
**caractérisée en ce que**

    - le dispositif de contrôle (6) détermine une valeur de charge ($P_{mech(t)}$) et/ou une température qui opèrent dans le ou les actionneurs à corps solide (3),
    - une tension d'actionneur à corps solide (Upiezo) étant mesurée sur au moins un des actionneurs à corps solide à un premier moment (t = 0) et à un moment ultérieur pendant une durée (T) et
    - une variation des tensions d'actionneurs à corps solide (ΔUpiezo) étant déterminée en tant que valeur de référence pour déterminer la valeur de charge $P_{mech(t)}$ et/ou la température à partir de la différence des tensions d'actionneur à corps solide (Upiezo) aux différents moments.

7. méthode selon la revendication 6, dans laquelle le dispositif de contrôle (6) détermine une variation de la tension d'actionneur à corps solide (ΔUpiezo), en tant que différence de la tension d'actionneur à corps solide (Upiezo) sur au moins un actionneur à corps solide au début du chargement de l'actionneur à corps solide et de la tension d'actionneur à corps solide (Upiezo) sur l'actionneur à corps solide à la fin du déchargement de l'actionneur à corps solide.

8. Méthode selon la revendication 6 ou 7, dans laquelle des paquets d'énergie sont chargés entre une composante inductive du dispositif de contrôle (6) et les actionneurs à corps solide (3) dans les deux sens.

9. Méthode selon l'une des revendications 6-8, dans laquelle le dispositif de contrôle contrôle un dispositif d'entraînement à actionneur à corps solide (0) comprenant un arbre (2) avec un axe d'arbre et un dispositif d'entraînement (4) lequel comporte les actionneurs à corps solide (3), pour mettre l'arbre (2) en rotation d'arbre autour de l'axe d'arbre, le dispositif de contrôle (6) relevant et déterminant une charge en tant que valeur de charge $P_{mech(t)}$ opérant sur l'arbre (2) ou relativement à l'arbre sur un logement (1) du dispositif d'entraînement à actionneur à corps solide.

10. Méthode selon l'une des revendications 6 - 9, dans laquelle une variation de la tension d'actionneur à corps solide $\Delta U_{piezo}$ est déterminée pendant une durée T déterminée en tant que valeur de référence selon

$$\Delta U_{Piezo} = U_{Piezo(0)} - \sqrt{\frac{2}{C_{Piezo}} \left( \frac{C_{Piezo} U_{Piezo(0)}^2}{2} + \sum_{i=1}^{n_{Lade(0 \to T)}} W_{Lade(i)} + \sum_{i=1}^{n_{Entlade(0 \to T)}} W_{Entlade(i)} + \int_0^T P_{mech(t)} dt + \int_0^T P_{elekt(t)} dt \right)}$$

- où $U_{Piezo(0)}$ est la tension d'actionneur à corps solide à un premier moment t = 0, $C_{Piezo}$ est une capacité de grand signal de l'actionneur à corps solide (3), $n_{Lade(0 \to T)}$ est un nombre de valeurs d'énergie chargées ou d'impulsions d'énergie $W_{Lade(i)}$ de grandeur variable pendant la durée T, $n_{Entlade(0 \to T)}$ est un nombre de valeurs d'énergie déchargées ou d'impulsions d'énergie $W_{Entlade(i)}$ de grandeur variable pendant la durée T, et $P_{mech(t)}$ sont des puissances mécaniques et $P_{elek(t)}$ des puissances électriques qui opèrent pendant la durée T sur les actionneurs à corps solide (3) en tant que grandeurs physiques,
- une tension d'actionneur à corps solide (Upiezo) étant mesurée sur au moins un des actionneurs à corps solide à un premier moment (t = 0) et à un moment, ultérieur pendant une durée (T) et
- une variation des tensions d'actionneurs à corps solide (ΔUpiezo) étant déterminée en tant que valeur de référence pour déterminer la valeur de charge $P_{mech(t)}$ et/ou la température à partir de la différence des tensions d'actionneur à corps solide (Upiezo) aux différents moments.

$y$

$x$

0

40

4

4

1

3

2

60

6

$6 \rightarrow 3$    $3 \rightarrow 6$

$U_{Piezo(0)}$

$U_{Piezo(T)}$   $\Delta U$

$W_{Lade(i)}$    $W_{Entlade(i)}$

60

3

61   $\downarrow \int_0^T P_{mech}(t)dt$

$$\Delta U_{Piezo} = U_{Piezo(0)} - \sqrt{\frac{2}{c_{Piezo}}\left(\frac{c_{Piezo}U_{Piezo(0)}^2}{2} + \sum_{i=1}^{n_{Lade(0 \rightarrow T)}} W_{Lade(i)} + \sum_{i=1}^{n_{Entlade(0 \rightarrow T)}} W_{Entlade(i)} + \int_0^T P_{mech}(t)dt + \int_0^T P_{elekt}(t)dt\right)}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1098429 A2

- WO 03091559 A